# EUROPEAN PATENT SPECIFICATION

(11) **EP 4 183 683 B1**
(45) Date of publication and mention of the grant of the patent: **10.07.2024**
(21) Application number: 22204864.7
(22) Date of filing: 01.11.2022
(51) Int. Cl.: B64D 1/12, F16B 21/16, F16B 2/18, B64U 101/64, F16B 2/04, F16B 5/06

(54) **COUPLING DEVICE**
KUPPLUNGSVORRICHTUNG
DISPOSITIF D'ACCOUPLEMENT

(30) Priority: 16.11.2021 GB 202116850
(43) Date of publication of application: 24.05.2023
(73) Proprietor: L3Harris Release & Integrated Solutions Ltd, Brighton BN1 9HU (GB)
(72) Inventor: CLARKE, Alexander Richard, Brighton, BN1 9HU (GB)
(74) Representative: ATIP

(56) References cited:
- US-A- 3 085 462
- US-A- 3 430 305
- US-A- 3 883 097
- US-A- 4 523 731

## Description

This invention relates to releasable mechanical couplings such as may be used to secure a cargo pod, package or other jettisonable item to an aircraft, for example to secure a cargo pod to a cargo delivery UAV. The invention is however of more general applicability, and can be used in a wide variety of circumstances where a releasable, easily mated, reliable, fixed mechanical connection is needed, for example between: a vehicle and a load (e.g. an ISO container and a flat bed truck or ship's cargo deck); between a vehicle and a fixed location (e.g. a submarine ROV and a docking fixture, or subsea work station); between two structures or objects (e.g. between stacked ISO containers on a cargo ship); between two vehicles or vehicle parts (e.g. between a tractor and trailer, between railway rolling stock, or between stages of a rocket); or between a machine and a replaceable/exchangeable machine tool (e.g. a machine platen and a mould or press tool), to name a few of a myriad of possible uses.

GB859458 and US3883097 disclose ball lock releasable mechanical couplings of the kind in which locking balls are lockingly projectable from and retractable into apertures circumferentially distributed about a tubular member which itself projects from one of the parts or objects to be releasably coupled to another. The balls are releasably locked in their projecting position by a suitably profiled plunger slidable within the bore of the tubular member. In their projecting position, the balls are received in a circumferential groove or corresponding series of circumferentially spaced apertures formed in the side wall of a socket. This socket is formed in or attached to the other part or object to be coupled, for reception of the projecting tubular member. In each case the plunger is movable to its unlocked position by a powered actuator; such as by pyrotechnically generated or pneumatic gas pressure acting on a piston coupled to the plunger. The piston (or other suitable powered actuator) and the plunger may be integrally formed, or connected to one another either directly or via a kinematic linkage. US4523731 and US3596554 disclose further examples of coupling mechanisms in which a plunger similarly moves between two different operative positions, so that the same profiled surface of the plunger interacts with locking balls, with movement of the plunger between the two positions in one unlocked position to a radially extended, locking position, and movement of the plunger between the two positions in the other direction allowing the balls to move from their locking position back to their unlocked position.

To maintain the mechanical connection between the two releasably coupled parts or objects in normal use, the plunger may be biased towards its locked position. In any event, after the coupling has been released by operation of the powered actuator, the balls might be returned by the plunger to their projecting, locked positions. Therefore to allow the releasable coupling to be made up or remade, in GB859458 manual means are provided for at least temporarily moving the plunger to the released position. Such means could also allow the manual release of the coupling independently of powered release. A manual release mechanism can be useful to circumvent the powered actuator when desired; but it can also present a serious safety hazard. Correct engagement and locking of the disclosed couplings is not completely straightforward either, and requires some knowledge or training. Forcefully attempting to make up the couplings without ensuring that the plunger is in the correct, released, position could result in damage to the couplings, and even render them inoperative. US3085462 concerns a releasable fastener comprising a plunger movable axially in either direction from a central position, to provide for lateral retraction of locking balls.

To mitigate such problems, the present invention provides a coupling mechanism as defined in claim 1.

The stop is movable relative to the lug whereby, with the objects disconnected, it can be moved or set to the first position. This can also, where necessary, move the shuttle along the insertion axis to the position in which its first surface profile interacts with the locking elements. The lug is therefore set or returned to a condition in which inserting it into a corresponding well will cause each locking element to automatically lock into the associated recess in the well side wall. Following disconnection of the coupling mechanism, there is therefore no need for any manual intervention in order to re-set the coupling mechanism ready for reconnection. For example, the stop can be moved from the first position to the second position (by a powered actuator or manually) when it is desired to disconnect the first and second objects, and the stop can be biased towards the first position so that the coupling mechanism is then automatically re-set ready for reconnection again. Or if a fail safe condition demands disconnection of the coupling, the stop can be biased towards the second position and the powered actuator or manual means arranged to hold the stop in the first position against this bias. Or the stop can be moved between the first and second positions by a double acting powered actuator, e.g. a double acting powered actuator having two rest conditions corresponding to the first and second positions of the stop.

The movable stop may comprise a body slidable within the lug between the first and second positions and which can be selectively held at the first position and at the second position.

The shuttle is biased away from the base of the well by the first resilient biasing means. Thus, as the lug is inserted into the well, the first resilient biasing means acts on the shuttle. The first surface profile of the shuttle moves the locking elements outwards relative to the insertion axis and into contact with the well side wall.

Reaction from the locking elements onto the first surface profile also moves the shuttle together with the lug at this point. This causes compression of the first resilient biasing means as the lug continues to move into the well. When the locking elements draw level with the recessed part of the well side wall, they are pushed outwards into locking engagement therewith by the first surface profile. The shuttle can then move under the influence of the first resilient biasing means, outwardly of the well and inwardly of the lug, so that the first surface profile can hold the locking elements locked in the recessed part of the well side wall.

The first surface profile may comprise a slope which, with the coupling mechanism under a separation force or load and the movable stop moved towards the second position, allows the shuttle to be moved by the first resilient biasing means so that the locking elements interact with the second surface profile. The coupling mechanism will thereby uncouple reliably when under load, upon movement of the movable stop from the first position to the second position.

The coupling mechanism may comprise second resilient biasing means arranged to bias the shuttle away from the movable stop. These second resilient biasing means can still allow the stop to limit the biased movement of the shuttle along the insertion axis (e.g. by the movable stop abutting the shuttle). The locking elements therefore interact with the first surface profile when the lug is inserted into the well, and thus the locking elements hold the lug locked in the well. However, as the stop is moved towards the second position, the first resilient biasing means may cause the shuttle initially to "follow" stop, until the locking elements interact with the second surface profile of the shuttle and escape from the recessed part of the well side wall. The second resilient biasing means may then allow the stop to move away from the shuttle (creating a gap between these two parts) before the stop reaches the second position. When the locking elements have been released from within the well by interaction with the second surface profile, they are no longer subject to any radially inwardly directed reaction forces and therefore do not offer any significant resistance to movement of the shuttle along the insertion axis. Thus when the lug has separated from the well and the stop is moved back to the first position, the gap now existing between the movable stop and the shuttle is not eliminated. Instead the second resilient biasing means can apply a force on the shuttle outwardly along the insertion axis which is sufficient to move the shuttle so that the first surface profile (instead of the second) interacts with the locking elements. The coupling mechanism is thus automatically set or re-set, ready for automatic locking engagement by simple insertion of the lug into the well.

The first resilient biasing means may act between the shuttle and a plunger extending outwardly from the lug in the direction of the insertion axis. This can provide a robust construction in which the first resilient biasing means is internal to the lug, where it has greater protection from accidental damage.

The second resilient biasing means may act between the plunger and the stop. This is mechanically advantageous, as then the second resilient biasing means can be compressed by insertion of the lug into the well to reduce or eliminate the gap between the shuttle and the stop. The stop can therefore positively retain the first surface profile in interactive engagement with the locking elements. Moreover, with this arrangement the second resilient biasing means doesn't oppose operation of the first resilient biasing means.

The movable stop may comprise a (bistable) mechanism able to selectively hold it stably in either of its first and second positions. For example, the movable stop may comprise cam and a cam follower. Thus, with an appropriate cam profile, the movable stop may be self-locking in its first and second positions. Other appropriate known bistable mechanisms are available within the ordinary competence of the skilled person, for example overcentre- (toggle-) type mechanisms, latching mechanisms with multiple detents, worm-and-wheel drive mechanisms, etc.

The movable stop may be connected to a powered actuator or to manual actuation means either directly or by a kinematic linkage. This may enable the powered actuator or manual actuation means to be positioned at any convenient location on or in the second object (for example at a desired location in a cargo pod or vehicle), independently of the position of the lug thereon.

The coupling mechanism may comprise a plurality of the wells and a corresponding plurality of the lugs, each lug provided with movable stops and kinematic linkages as described above and connected in common to the powered actuator or manual actuation means. A single powered actuator or manual actuation means (or combinations thereof acting in parallel to provide redundancy in case of failure) may therefore simultaneously power and control the coupling and uncoupling of a number of spatially distributed lugs provided on the second object, with a corresponding number of complementary wells spatially distributed on the first object. A strong, stable, adaptable, versatile, and reliable power operated releasable mechanical coupling device may therefore be obtained.

The invention and some of its further optional features and advantages are described below with reference to illustrative embodiments shown in the drawings, in which:
Figure 1 is a partly "see-through" perspective view showing the main components of a coupling mechanism embodying the invention;
Figures 2-4 are diagrammatic cross-sectional views showing a sequence of stages of operation of the mechanism of Figure 1, as a second object (e.g. a suspended cargo pod) is loaded onto, or offered up for mechanical connection with, a first object (e.g. a UAV);
Figure 5 shows the mechanism of the preceding figures in a locked state, so that the first and second objects are mechanically locked together;
Figures 6-8 are similar to Figures 2-5, but show a sequence of stages during release of the mechanism, for separation of the first and second objects, and
Figure 9 shows a further embodiment of the invention, comprising a larger assembly of several coupling mechanisms each similar or identical to those shown in the preceding figures, interconnected by kinematic linkages so that all are operated in common by a single powered actuator.

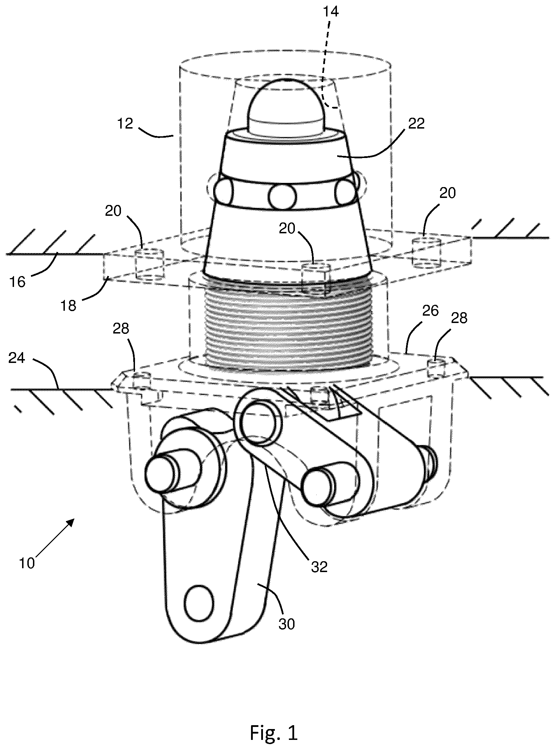

The coupling mechanism 10 shown in Figure 1 comprises a housing 12 whose hollow interior forms the well 14. The housing 12 may be fixedly secured to the first object 16 in any suitable manner, for example by a mounting flange 18 and suitable fasteners (not shown) received in holes 20. Alternatively, the well 14 may be formed directly in the first object 16. The lug 22 is shown in Figure 1 similarly mounted to the second object 24 by a mounting flange 26 with fastener holes 28; although once again this is not essential to the invention. Any suitable mounting method may be used, or the lug 22 may be integrally formed with the second object 24. Figure 1 also shows illustrative examples of the cam and cam follower for the movable stop. In the example shown, the cam takes the form of a cam lever 30 and the cam follower takes the form of a cam follower arm 32, each pivotally journaled to the lug mounting flange 26.

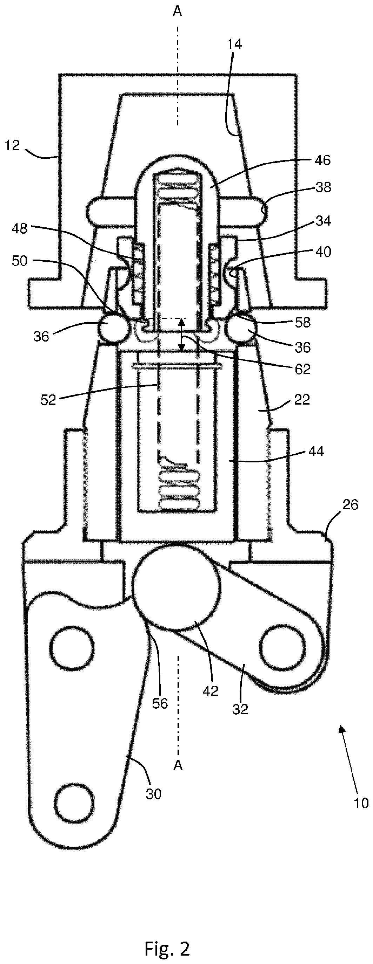

The lug 22 is insertable into and withdrawable from the well 14 along the insertion axis, marked as A - A in Figure 2. Also visible in Figure 2 are the shuttle 34, the locking elements 36, and the recess 38 formed in the side wall of the well 14, into which recess the locking elements 36 will project when moved to their extended position (as further described below, with reference to later Figures of the drawings). In the example shown in the drawings, the locking elements comprise a plurality of separate locking balls 36, each captively held in a respective "window" in the lug 22, known as such e.g. from GB859458. However, the locking elements may take any suitable form, e.g. tapered, wedge-shaped, or other suitably shaped elements capable of interaction with the first and second surface profiles of the shuttle 34 and with the recess 38 to provide the required extension and retraction movements. The locking elements 36 may be separate bodies with no resilient links between them, as shown in the drawings. Or they may be mechanically linked, e.g. by mechanical springs or resilient bridging pieces (not shown), including integrally formed resilient bridges; such resilient mechanical links providing either contraction or extension bias, or both, during movement of the locking elements, as required.

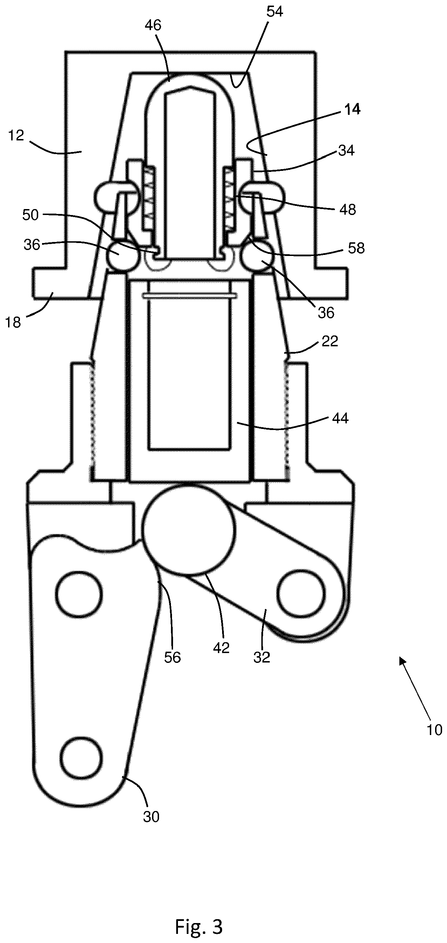

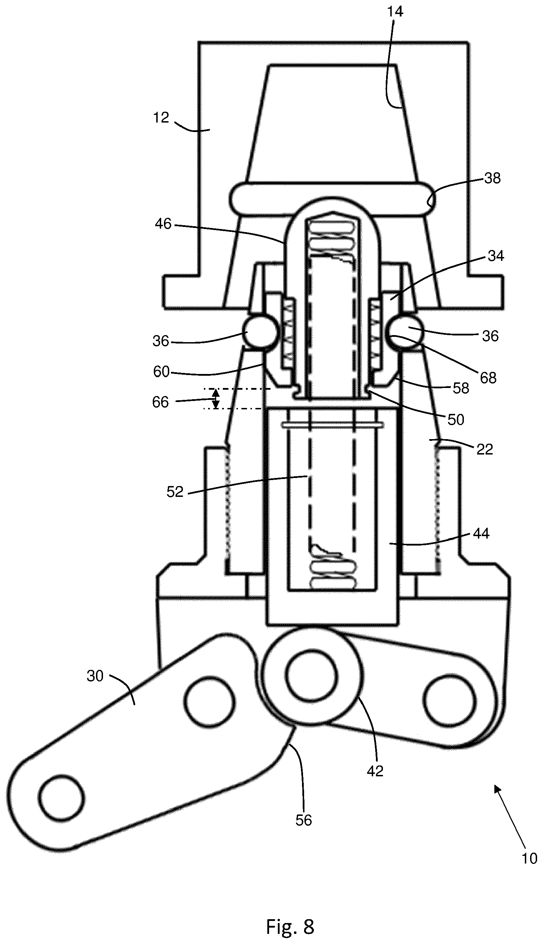

The shuttle 34 is slidable in a bore 40 running axially through the lug 22. Figure 2 shows the movable stop to comprise (in addition to the cam lever 30 and cam follower arm 32): a cam roller 42 journaled to the arm 32, and a stop body 44 slidable in the bore 40 of the lug 22. The plunger 46 is also shown, extending outwardly from the lug 22 in the direction of the insertion axis A - A. The plunger 46 is a close sliding fit in an axial bore formed through the shuttle 34. It has an enlarged head portion projecting from the lug 22. At the opposite end to the plunger 22's head portion, the bore of the shuttle 34 has an inwardly projecting collar. The plunger 46 and shuttle 34 therefore define between them an annular chamber of variable length. The first resilient biasing means in this example take the form of a wave spring (compression spring) 48 housed in this annular chamber so as to act between the shuttle 34 and the plunger 46. The plunger 46 may be retained in the shuttle 34 by a circlip (omitted in Figure 2 and other drawings, for simplicity), received in a circlip groove 50. Also in the illustrative arrangement shown in Figure 2, the stop body 44 and the plunger 46 each contain an axial counterbore. The open ends of the counterbores are mutually adjacent. Each counterbore may therefore accommodate a respective end of the second resilient biasing means, which in this example takes the form of a coil spring (compression spring) 52. For clarity and simplicity, only the extremities of this coil spring 52 are shown in full in Figures 2 and 8. Its central portion is indicated in these Figures by dotted lines. In Figures 3-7, the coil spring 52 is omitted altogether, again for clarity and simplicity. Figure 2 shows the coupling mechanism in its completely unlocked state, but during an initial stage of forming the locked mechanical connection between the lug 22 and the well 14 in the housing 12.

Figures 2-4 show a sequence of stages of operation of the illustrative coupling mechanism as the lug 22 is inserted in the well 14 to form the mechanical connection, by appropriate mechanical handling or manipulation of the first and second objects.

For example, where the first object (16, Figure 1) is a UAV and the second object (24, Figure 1) is a cargo pod releasably securable underneath the UAV, the cargo pod may be lifted towards the UAV airframe by independent ground service equipment. In Figure 2, the lug 22 is shown being manoeuvred or inserted into the well 12 but has not yet made any physical contact or locking engagement with it. To make the lug 22 easier to guide and manoeuvre into the well 14, both of these components have complementary tapered or generally frustoconical surface profiles.

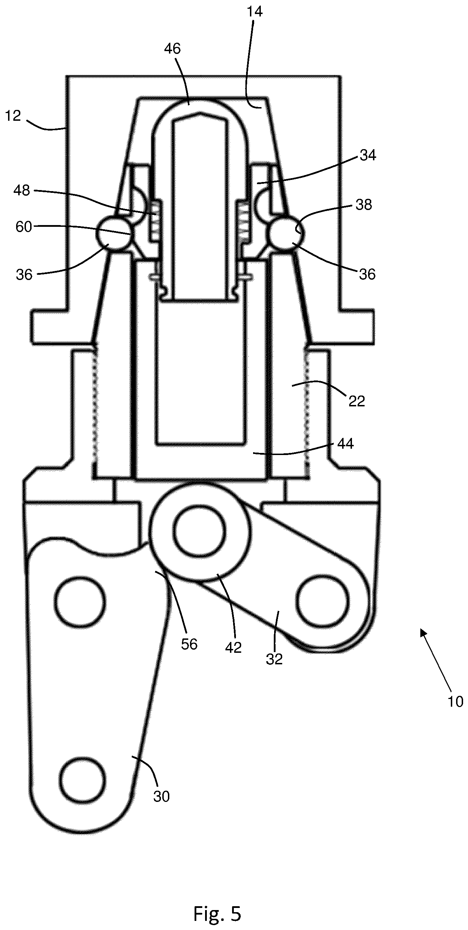

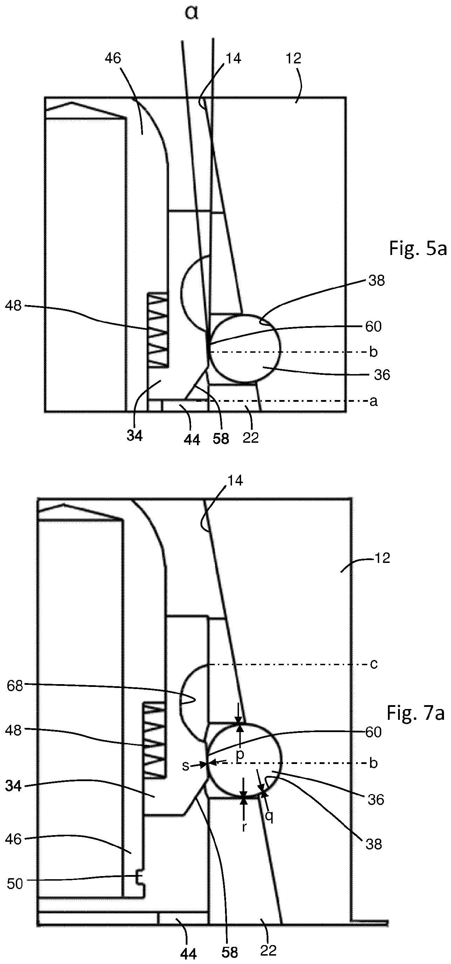

In Figure 3, the lug 22 is shown inserted further into the well 14 (in comparison to Figure 2), to the point at which the plunger 46 has just made contact with the base 54 of the well 14. From this point on in the insertion sequence, further movement of the lug 22 into the well 14 in the direction of the insertion axis A - A, will cause compression of the second resilient biasing means (coil spring 52, Figure 2), which has one end braced against the base 54 of the well 14 via the plunger 46, and the other end braced within the stop body 44. During the insertion sequence of Figures 2-4, the stop body 44 is held and locked stationary within (so as to advance together with) the advancing lug 22, by the cam roller 42 and a constant radius lobe 56 of the cam lever 30. The stop body 44 and the movable stop 30, 32, 42, 44 are then in the first position, in which the biased movement of the shuttle 34 along the insertion axis A - A is limited so that the locking elements 36 interact with the first surface profile of the shuttle 34. The axial limits of this first surface profile are indicated by the references a and b in Figure 5a. Immediately or soon after the plunger 46 encounters the base 54 of the well 14, the locking elements 36 will begin to ride up along an adjacent sloping surface 58 forming part of the first surface profile of the shuttle 34. At this time the shuttle 34 is held stationary relative to the plunger 46 against the circlip in the groove 50 by the first resilient biasing means (wave spring) 48, which is able to overcome the weight of the locking elements 36 and any slight frictional forces between them and the apertures which house them in the lug 22. The locking elements 36 are therefore cammed radially outwards by the surface 58 until they encounter the inner wall of the well 14. Further advancement of the lug 22 into the well 14 then causes the locking elements 36 to be cammed radially inwards again by the sloping surface of the well 14 as this approaches the correspondingly sloped surface of the lug 22. At this point the plunger 46 is stationary within the well 14, so the locking elements 36 now push the shuttle 34 along the plunger 46 so as to compress the first resilient biasing means (wave spring) 48.

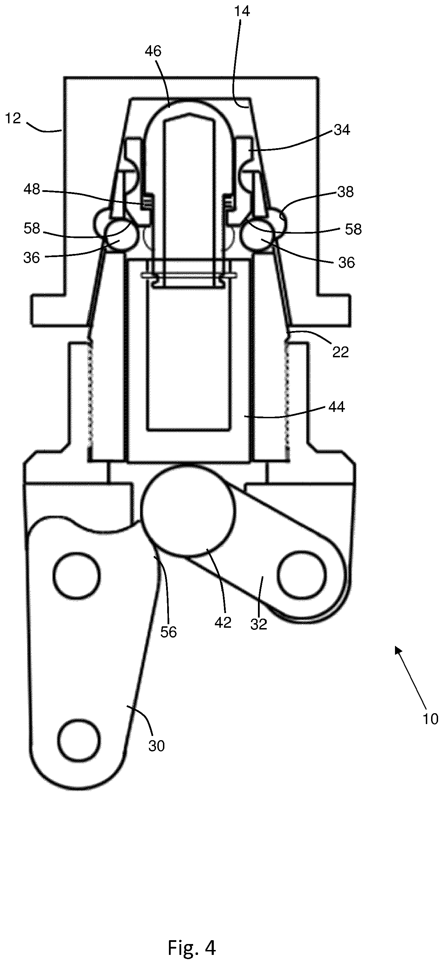

As the locking elements 36 draw level with the recess 38 in the well side wall, the wave spring 48 (first resilient biasing means) has been compressed close to its solid condition. This is the configuration of the locking mechanism shown in Figure 4. The wave spring 48 is therefore able to expand and drive the shuttle 34 back inwards along the plunger 46 so that the sloping surface 58 cams the locking elements into the recess 38. Under the continued influence of the wave spring (first resilient biasing means) 48, the shuttle then snaps into place behind the locking elements 36, so that a locking surface 60 on the shuttle (which locking surface makes up the remainder of the first surface profile) rests radially inward of each locking element 36. The locking elements are therefore lockingly retained in the recess 38. The lug 22 is therefore lockingly held in the well 14. This is the condition of the locking mechanism 10 shown in Figure 5. In fact, for reasons explained later, the surface 60 may be provided with a slight reverse camber or taper in comparison to the camber or taper of surface 58, as represented by the angle α shown in Figure 5a (which is an enlarged view of the relevant portion of Figure 5). Loads tending to pull the lug 22 out of the well 14 will therefore (as explained later) cause the locking elements 36 to exert a small net force on the shuttle 34 along the insertion axis A - A in this pull out direction. However, during insertion of the lug 22 into the well 14 as shown in Figures 2-5, the plunger 46 has been pushed into the lug 22 against the bias of the second resilient biasing means (coil spring) 52. This is sufficient to eliminate the gap 62 which exists between the shuttle 34 and the stop body 44 when the locking mechanism is set in its unlocked state but primed ready for locking insertion into the well 14 (see Figure 2). Therefore in the locked state as shown in Figure 5, when the shuttle 34 snaps into place behind the locking elements 36, it rests against and is supported by the stop body 44, which in turn is locked in place by the cam roller 42 and the cam lever 30. The shuttle 34 therefore cannot move along the axis A - A in the lug pull out direction and the locking elements 36 are held stably in their locking position projecting into the recess 38.

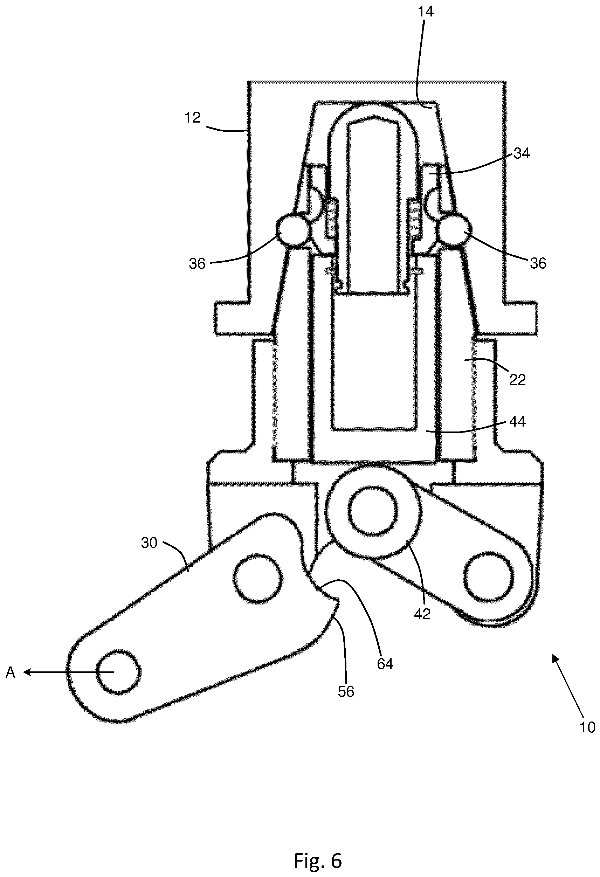

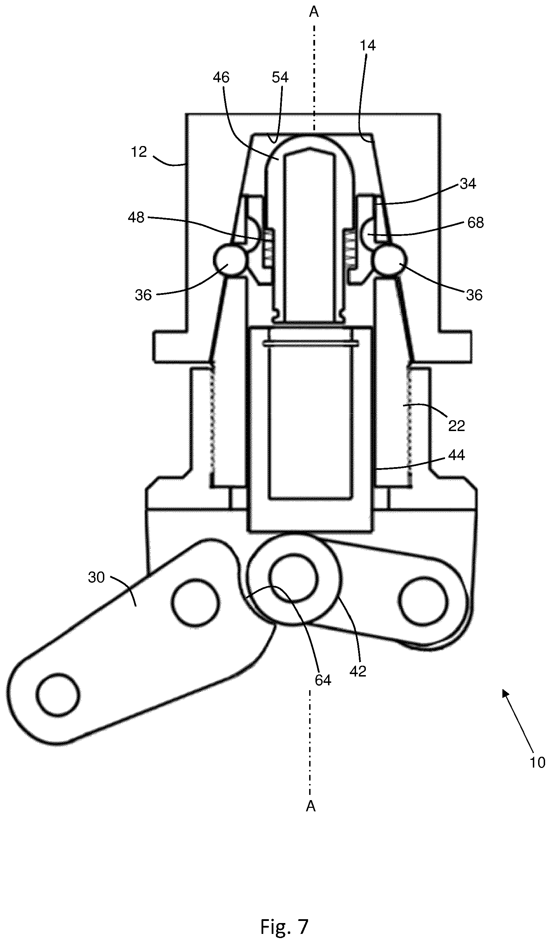

To release the locking mechanism 10 and separate the first and second objects 16, 24 from one another, the cam lever 30 is pulled in the direction of arrow A as shown in Figure 6. For example, the cam lever 30 may be connected to a powered actuator, or may be actuated in any other suitable way, including by manual means. For example, at its simplest, such manual actuation means may comprise a suitable knob or handle (not shown) directly formed by, connected to or mounted on the cam lever 30. Alternatively, the manual actuation means or powered actuator may be connected to the cam lever 30 by a kinematic linkage (not shown). Powered actuation and/or the use of a kinematic linkage allows the lug 22 to be positioned at some distance from the operator if required. For the purposes of illustration, the cam roller 42 is shown separated from the cam lever 30 in Figure 6 but in practice as inertial, weight, friction and damping effects will be negligible, the cam roller 42 will in fact remain in contact with the cam lever under the influence of the second resilient biasing means (coil spring) 52. The cam roller will therefore drop down off the lobe 56 and onto a smaller radiused portion 64 of the cam lever 30's cam profile. Again under the influence of the second resilient biasing means (coil spring) 52, the stop body 44 will follow the cam roller 42 and move along the insertion axis A - A away from the well 14. This is the situation shown in Figure 7.

For illustrative purposes, Figure 7 shows the shuttle 34 still in its locked position, with a relatively large gap opened up between the adjacent surfaces of the shuttle 34 and the stop body 44. However in practice in most cases the shuttle will remain in contact with and move in unison with the stop body 44 during the initial part of the stop body 44's movement along the insertion axis A - A away from the well 14. This is due at least in part to the influence of the first resilient biasing means (wave spring) 48 on the shuttle 34. However it may also be partly due to any separation forces acting between the first and second objects 16, 24 also acting on the reverse cambered locking surface 60 of the shuttle 34 via the locking elements 36. Such a separation force may arise for example from the weight of the second object 24 if it is suspended from the first object 16 via the coupling mechanism 10. As can be seen from the enlarged portion of Figure 7 shown in Figure 7a, the eccentric loading p, q (arising from the separation load) at the corresponding contact patches between each locking element 36 and the housing 12 and lug 22 respectively, imposes a moment on the locking element 36 which in turn generates a further contact force pair r at a contact patch between the locking element and the lug 22, and a still further contact force pair s at a contact patch between the locking element and the locking surface 60 of the shuttle 34. As the locking surface 60 is at an angle α to the insertion axis A - A, although radial components of the contact forces s will cancel each other out, axial components of these forces will sum to act on the shuttle 34, pushing it away from the well 14 along the insertion axis A - A. This force may counteract any tendency for the shuttle 34 to jam under the radial forces imposed on it by the locking elements 36.

When the shuttle 34 reaches the circlip in the groove 50, it ceases to move along the plunger 46. The stop body 44 however continues to move away from the plunger 46 under the influence of the second resilient biasing means (coil spring) 52. A gap 66 therefore opens up between the shuttle 34 and the stop body 44. This is the situation shown in Figure 8. In this Figure together with Figure 7a, it can also be seen that due to movement of the movable stop 30, 32, 42, 44, the locking elements 36 no longer interact with the first surface profile of the shuttle 34, but now interact with the second surface profile of the shuttle 34. The axial limits of this second surface profile are indicated by the references b and c in Figure 7a. The second surface profile includes a groove 68 of part circular or other cross-section of complementary shape to the locking elements 36. This groove 68 extends circumferentially of the shuttle 34. With the plunger 46 in contact with the base 54 of the well (see Figure 7) and the shuttle 34 against the circlip in groove 50 (see Figure 8), the shuttle groove 68 lies adjacent to the locking elements 36. Pulling the lug 22 from the well 14 therefore can now cam the locking elements 36 out of their position extending into the recess 38, so that they retract into the shuttle groove 68, and allow the lug 22 to be fully withdrawn from the well 14. This is the configuration of the coupling mechanism 10 shown in Figure 8.

Then if the cam lever 30 is returned to the first position as shown in Figure 2, the remainder of the movable stop comprised by the cam follower arm 32, cam roller 42 and stop body 44 is likewise moved to the first position as shown in Figure 2 as the cam roller 42 moves back onto the lobe 56. The second resilient biasing means (coil spring 52) acting via the plunger 46 and circlip in the groove 50 is strong enough to push the shuttle 34 past the locking elements 36, whereby the locking elements no longer interact with the second surface profile of the shuttle 34 but once again interact with the first surface profile of the shuttle 34. In particular, the locking elements move out of the shuttle groove 68, and back behind the sloping surface 58 of the shuttle 34. The locking mechanism 10 is therefore returned to the configuration shown in Figure 2, in which it is set in its unlocked state, but primed ready for locking insertion into the well 14. Use of the locking mechanism 10 is therefore straightforward and relatively fool proof for the operator. With the coupling mechanism 10 locked, moving the cam lever 30 from the position shown in Figure 5 to the position shown in Figure 6, uncouples the coupling mechanism 10. Then moving the cam lever 30 back to the position shown in Figure 1 (i.e. the same position as shown in Figure 5) automatically re-sets the coupling mechanism 10 to automatically lock by simply inserting the lug 22 into the well 14.

On the other hand, if the coupling mechanism 10 is operated by:
(a) inserting the lug 22 into the well 14 with the movable stop (cam lever 30, cam roller 42, cam follower arm 32, and stop body 44) in the position shown in Figure 8,
(b) holding the lug in the well (e.g. using ground handling equipment in the case of a lug attached to a cargo pod being connected beneath a UAV), and then
(c) moving the cam lever 30 to the position shown in Figure 5,
this will still result in correct locking engagement of the coupling mechanism 10. The cam lobe 56 will drive the stop body 44 towards the well 14 via the cam roller 42, compressing the second resilient biasing means (coil spring 52) and initially eliminating the gap 66. Continued movement of the stop body 44 towards the well 14 then urges the shuttle 34 further into the well 14. The locking elements 36 are thereby cammed out of the groove 68 and into the recess 38, whereupon the locking surface 60 on the shuttle 34 and the lobe 56 on the cam lever 30 hold the locking elements 36 in the recess 38.

The coupling mechanism therefore comprises a movable stop having a first position in which the locking elements interact with the first surface profile of the shuttle, and a second position in which the biased movement of the shuttle along the insertion axis is extended so as to cause the locking elements to interact with a second surface profile of the shuttle whereby the locking elements move from their extended position to their retracted position. Thus in the illustrated embodiments, the shuttle 34 can transition between three different operative states: a fully "up" (or outward) position along the insertion axis, as shown in Figures 2-4; a mid- or locking position as shown in Figure 5, and a fully "down" (or inward) position, as shown in Figure 8. As the shuttle 34 transitions between the fully up and the mid-positions, its first surface profile a-b (Fig. 5a) interacts with the locking balls 36. As the shuttle 34 transitions between the mid-position and the fully down position, its second surface profile b-c (Fig. 7a), separate and distinct from the first surface profile a-b, interacts with the locking balls 36 whereby the locking elements move from their extended position to their retracted position.

In the prior art, in contrast, the plunger interacting with the locking balls (or like elements) transitions between only two operative positions and the locking balls interact with only a single surface profile of the plunger. There is no third operative position of the plunger and hence no second or further surface profile (distinct from the first) which allows movement of the locking elements from their extended position to their retracted position.

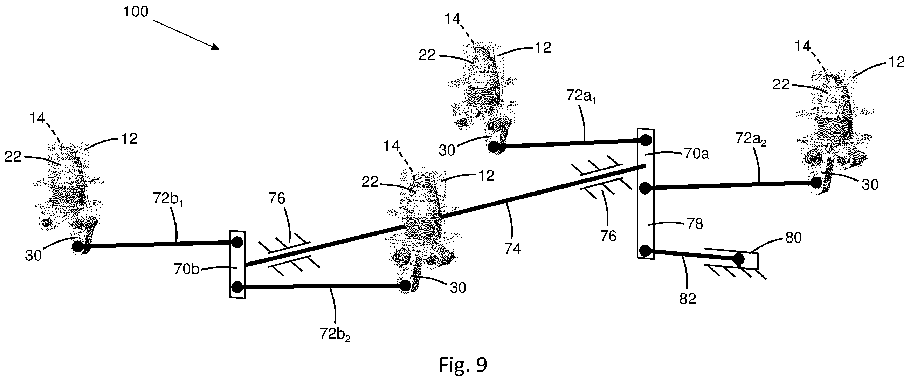

Figure 9 shows a coupling mechanism 100 which includes a kinematic linkage operatively interconnecting four wells 14 and four lugs 22, which wells and lugs as such may be in accordance with the invention as described above. Other numbers of wells and numbers of complementary lugs may clearly be provided by appropriate adaptation of the arrangement shown, within the ordinary competence of those skilled in the art. Cam levers 30 of the movable stops of each lug 22 are connected to corresponding crank levers 70a and 70b by connecting rods 72a₁, 72a₂, 72b₁, and 72b₂. The connections at each end of each connecting rod 72a₁, 72a₂, 72b₁, 72b₂ may comprise for example a clevis and pivot pin (or other suitable pivot connection) represented diagrammatically in Figure 9 by a small solid circle. The crank levers 70a and 70b are interconnected by a torsion shaft or tube 74 journaled in bearings 76. These bearings may be mounted to the second object (for example the frame or chassis of a detachable cargo pod, not shown in Figure 9), together with the lugs 22 and their associated movable stops/cam levers 30. The wells 14 may be formed in the first object (for example the airframe of a UAV, not shown in Figure 9) or may be formed in housings 12 attached to the first object. The crank lever 70a has an extension 78 at one end. A powered linear actuator 80 is mounted to the second object. A further connecting rod 82 is connected to the linear actuator 80 at one end and to the crank lever extension 78 at its other end, by suitable pivot connections, e.g. clevises and pivot pins. Activation of the actuator 80 extends the rod 82 and therefore moves all of the cam levers 30 from their locking to their unlocking position. The lugs 22 are thereby disconnected from their wells 14, allowing separation of the first and second objects. The actuator 80 may be replaced or supplemented by a manual actuation lever or other suitable manual actuation means for moving the connecting rod 82, crank levers 70a, 70b or other parts of the kinematic linkage, so as to move the cam levers 30 between the locked and released positions as required. The cam levers 30, connecting rods 72a₁, 72a₂, 72b₁, 72b₂, 82 and/or the torsion shaft 74 may be resiliently biased towards the locking position, for example by suitably arranged mechanical springs operatively connected to the kinematic linkage. The crank lever 70b may be provided with an extension, connecting rod, and powered linear actuator similar to those 78, 82, 80 associated with the crank lever 70a. The two powered linear actuators can provide redundancy in case one of the actuators should fail. Additionally or alternatively, powered linear actuators may be connected for direct operation of one or more or all of the cam levers 30. Additionally or alternatively, rotary powered actuators can be arranged to move one or more or all of the cam levers 30 and torsion shaft 74 from their locking to their unlocking positions. Where each cam lever 30 has its own associated powered actuator, further elements of the kinematic linkage may be omitted (although presence of the kinematic linkages may help to ensure co-ordinated simultaneous operation of the individual lugs and hence clean release of the coupling).

Further variants and modifications will be readily apparent to those skilled in the art. For example the powered linear actuator 80 may be replaced by a double acting powered linear actuator, in which case the resilient biasing means of the kinematic linkage may optionally be omitted. Alternatively, where a fail safe condition demands disconnection of the coupling, the linear actuator 80 and at least a part of the further connecting rod 82 may be replaced by resilient biasing means urging the crank lever 70a in the unlocking direction. A powered actuator or manual actuation means (linear or rotary) can then be provided for moving the crank lever 70a to the locking position when it is desired to maintain the first and second objects mechanically locked together. Corresponding modifications to the other actuator powered arrangements described above can be readily conceived by those skilled in the art in the event that fail safe separation of the objects is required. In any case, the powered actuators may be of any suitable kind, for example electrically, pyrotechnically, pneumatically (gas pressure) or hydraulically (incompressible fluid pressure) operated. Force/torque transmitting components of the above described kinematic linkage may be partially or wholly replaced by other suitable kinds of force/torque transmitting mechanisms or components, for example by cables, and/or Bowden cables, and/or hydraulic and/or pneumatic arrangements with master and slave cylinders, and/or gears, drive belts, drive chains, etc.

## Claims

1. A coupling mechanism (10) for securing a first object (16) to a second object (24), the coupling mechanism comprising:
a lug (22) configured to be formed on or secured to the second object (24), the lug (22) being removably insertable along an insertion axis (A-A);
a shuttle (34) movable within the lug (22) along the insertion axis (A-A);
a first resilient biasing means (48) arranged to bias the shuttle (34) ;
a plurality of locking elements (36) each movable radially in the lug (22) with respect to the insertion axis (A-A), between a retracted position allowing free insertion and withdrawal of the lug (22), and an extended position ;
each locking element (36) being both movable from the retracted position and retainable in the extended position by a first surface profile (a-b) of the shuttle (34);
the coupling mechanism (10) further comprising a movable stop (30, 32, 42, 44) having:
a first position in which the biased movement of the shuttle (34) along the insertion axis (A-A) is limited so that the locking elements (36) interact with the first surface profile (a-b) of the shuttle (34), and
a second position in which the biased movement of the shuttle (34) along the insertion axis (A-A) is extended so as to cause the locking elements (36) to interact with a second surface profile (b-c) of the shuttle (34) whereby the locking elements (36) move from their extended position to their retracted position, thereby allowing disconnection of the first (16) and second (24) objects;
the coupling mechanism further comprising a well (14) configured to be formed in or secured to the first object (16);
the lug (22) being removably insertable in the well (14) along the insertion axis (A-A);
whereby each locking element (36) in its extended position projects into a recess (38) formed in a side wall of the well (14) so as to lock the lug (22) in the well (14); and
whereby the locking elements (36) in their retracted position allow withdrawal of the lug (22) from the well (14);
**characterised in that**
insertion of the lug (22) into the well (14) causes the first resilient biasing means (48) to bias the shuttle (34) away from a base of the well (14).

2. A coupling mechanism (10) as defined in claim 1, in which the movable stop (30, 32, 42, 44) comprises a body (44) slidable within the lug (22) between the first and second positions and which can be selectively held at the first position and at the second position.

3. A coupling mechanism (10) as defined in claim 1 or 2, in which the first surface profile (a-b) of the shuttle (34) moves the locking elements (36) outwards relative to the insertion axis (A-A) and into contact with the well (14) side wall, whereby the locking elements (36) move the shuttle (34) together with the lug (22) until the locking elements (36) draw level with the recessed part (38) of the well (14) side wall, whereupon they are pushed outwards into locking engagement therewith by the first surface profile (a-b) and the shuttle (34) then moves under the influence of the first resilient biasing means (48), so that the first surface profile (a-b) can hold the locking elements (36) locked in the recessed part (38) of the well (14) side wall.

4. A coupling mechanism (10) as defined in any preceding claim, in which the first surface profile (a-b) comprises a slope which, with the coupling mechanism (10) under a separation force or load and the movable stop (30, 32, 42, 44) moved towards the second position, allows the shuttle (34) to be moved by the first resilient biasing means (48) so that the locking elements (36) interact with the second surface profile (b-c).

5. A coupling mechanism (10) as defined in any preceding claim, comprising second resilient biasing means (52) arranged to bias the shuttle (34) away from the movable stop (30, 32, 42, 44).

6. A coupling mechanism (10) as defined in claim 5, in which as the movable stop (30, 32, 42, 44) is moved towards the second position, the second resilient biasing means (52) allow the movable stop (30, 32, 42, 44) to move away from the shuttle (34).

7. A coupling mechanism (10) as defined in claim 6, in which when the locking elements (36) have been released from within the well (14) by interaction with the second surface profile (b-c), the lug (22) has separated from the well (14) and the movable stop (30, 32, 42, 44) is moved back to the first position, the second resilient biasing means (52) moves the shuttle (34) so that the first surface profile (a-b) interacts with the locking elements (36).

8. A coupling mechanism (10) as defined in any of claims 5-7, in which the first resilient biasing means (48) act between the shuttle (34) and a plunger (46) extending outwardly from the lug (22) in the direction of the insertion axis (A-A).

9. A coupling mechanism (10) as defined in any preceding claim, in which the movable stop (30, 32, 42, 44) comprises a mechanism (30, 32, 42) able to selectively hold it stably in either of its first and second positions.

10. A coupling mechanism (10) as defined in any preceding claim, in which the movable stop (30, 32, 42, 44) is connected to manual actuation means and/or a powered actuator (80).

11. A coupling mechanism (10) as defined in claim 10, in which the movable stop (30, 32, 42, 44) is connected to the manual actuation means and/or powered actuator (80) by a kinematic linkage (70a,b, 72a₁,a₂,b₁,b₂, 74, 76, 78, 82).

12. A coupling mechanism (10) as defined in claim 11, comprising a plurality of the wells (14), lugs (22), kinematic linkages (70a,b, 72a₁,a₂,b₁,b₂, 74, 76, 78, 82) and movable stops (30, 32, 42, 44), in which the kinematic linkages (70a,b, 72a₁,a₂,b₁,b₂, 74, 76, 78, 82) are connected in common to the manual actuation means and/or powered actuator (80).

13. A coupling mechanism (10) as defined in any of the preceding claims, in which the shuttle (34) can transition between a fully outward position along the insertion axis (A-A), a mid-position along the insertion axis (A-A), and a fully inward position along the insertion axis (A-A).

14. A coupling mechanism (10) as defined in any preceding claim in combination with at least one of the first and second objects (16, 24), wherein that object (16, 24) comprises:
(a) a vehicle or vehicle part
(b) a load
(c) a vehicle docking fixture
(d) a container for goods or cargo
(e) a machine platen
(f) a machine tool.

15. A coupling mechanism (10) as defined in any of claims 1-13 in combination with at least one of the first and second objects (16, 24), wherein that object (16, 24) comprises an aircraft.

## Patentansprüche

1. Kupplungsmechanismus (10) zur Befestigung eines ersten Gegenstandes (16) an einem zweiten Gegenstand (24), wobei der Kupplungsmechanismus umfasst:
eine Lasche (22), die so konfiguriert ist, dass sie auf dem zweiten Gegenstand (24) geformt oder daran befestigt ist, wobei die Lasche (22) entlang eines Einsteckachse (A-A) abnehmbar einführbar ist;
ein Shuttle (34), das innerhalb der Lasche (22) entlang die Einsteckachse (A-A) beweglich ist;
ein erstes elastisches Vorspannmittel (48), das so angeordnet ist, dass es das Shuttle (34) vorspannt;
mehrere Verriegelungselemente (36), die jeweils radial in der Lasche (22) in Bezug auf die Einsteckachse (A-A) zwischen einer eingefahrenen Position, die ein freies Ein- und Ausfahren der Lasche (22) ermöglicht, und einer verlängerten Position beweglich sind;
wobei jedes Verriegelungselement (36) sowohl aus der eingefahrenen Position heraus beweglich als auch in der ausgefahrenen Position durch ein erstes Oberflächenprofil (ab) des Schiffchens (34) gehalten werden kann;
der Kupplungsmechanismus (10) mit einem beweglichen Anschlag (30, 32, 42, 44) mit:
eine erste Position, in der die vorgespannte Bewegung des Shuttles (34) entlang die Einsteckachse (A-A) begrenzt ist, so dass die Verriegelungselemente (36) mit dem ersten Oberflächenprofil (a-b) des Shuttles (34) wechselwirken, und
eine zweite Position, in der die vorgespannte Bewegung des Shuttles (34) entlang die Einsteckachse (A-A) verlängert wird, um die Verriegelungselemente (36) mit einem zweiten Oberflächenprofil (b-c) des Shuttles (34) zu veranlassen, wodurch sich die Verriegelungselemente (36) von ihrer ausgefahrenen Position in ihre eingefahrene Position bewegen, wodurch das Trennen des ersten (16) und des zweiten (24) Objekts ermöglicht wird
der Kopplungsmechanismus, der ferner eine Vertiefung (14) umfasst, die so konfiguriert ist, dass sie in dem ersten Objekt (16) ausgebildet oder daran befestigt wird;
wobei die Lasche (22) entlang die Einsteckachse (A-A) abnehmbar in die Vertiefung (14) einführbar ist; wobei jedes Verriegelungselement (36) in seiner ausgefahrenen Position in eine Aussparung (38) hineinragt, die in einer Seitenwand der Vertiefung (14) ausgebildet ist, um die Lasche (22) in dem Vertiefung (14) zu verriegeln;
und
wobei die Verriegelungselemente (36) in ihrer eingefahrenen Stellung das Zurückziehen der Lasche (22) aus der Vertiefung (14) ermöglichen;
**dadurch gekennzeichnet, dass** das Einführen der Lasche (22) in die Vertiefung (14) bewirkt, dass das erste elastische Vorspannmittel (48) das Schiffchen (34) von einer Basis der Vertiefung (14) wegspannt.

2. Kupplungsmechanismus (10) nach Anspruch 1, bei dem der bewegliche Anschlag (30, 32, 42, 44) einen Körper (44) umfasst, der innerhalb der Lasche (22) zwischen der ersten und der zweiten Position verschiebbar ist und der selektiv an der ersten und an der zweiten Position gehalten werden kann.

3. Kupplungsmechanismus (10) nach Anspruch 1 oder 2, bei dem das erste Oberflächenprofil (a-b) des Shuttles (34) die Verriegelungselemente (36) relativ zu die Einsteckachse (A-A) nach außen und in Kontakt mit der Lochseitenwand (14) bewegt, wobei die Verriegelungselemente (36) das Shuttle (34) zusammen mit der Lasche (22) bewegen, bis die Verriegelungselemente (36) auf Höhe des vertieften Teils (38) der Lochseite (14) liegen Wand,
woraufhin sie durch das erste Oberflächenprofil (a-b) nach außen in den Verriegelungseingriff gedrückt werden und sich das Shuttle (34) dann unter dem Einfluss des ersten elastischen Vorspannmittels (48) bewegt, so dass das erste Oberflächenprofil (a-b) die in dem vertieften Teil (38) der Vertiefung (14) Seitenwand verriegelten Verriegelungselemente (36) halten kann.

4. Kupplungsmechanismus (10) nach einem der vorhergehenden Ansprüche, bei dem das erste Oberflächenprofil (a-b) eine Neigung aufweist, die es ermöglicht, dass das Shuttle (34) mit dem Kupplungsmechanismus (10) unter einer Trennkraft oder Last und dem beweglichen Anschlag (30, 32, 42, 44) in Richtung der zweiten Stellung bewegt wird, so dass die Verriegelungselemente (36) mit dem zweiten Oberflächenprofil (b-c) wechselwirken.

5. Kupplungsmechanismus (10), wie in einem der vorhergehenden Ansprüche definiert, mit einer zweiten elastischen Vorspanneinrichtung (52), die so angeordnet ist, dass sie das Shuttle (34) von dem beweglichen Anschlag (30, 32, 42, 44) weglenkt.

6. Kupplungsmechanismus (10) nach Anspruch 5, bei dem der bewegliche Anschlag (30, 32, 42, 44) in Richtung der zweiten Position bewegt wird, während die zweite elastische Vorspanneinrichtung (52) es dem beweglichen Anschlag (30, 32, 42, 44) ermöglicht, sich vom Shuttle (34) wegzubewegen.

7. Kupplungsmechanismus (10) nach Anspruch 6, bei dem sich die Verriegelungselemente (36) durch Wechselwirkung mit dem zweiten Oberflächenprofil (b-c) aus der Vertiefung (14) gelöst haben, die Lasche (22) von der Vertiefung (14) gelöst hat und der bewegliche Anschlag (30, 32, 42, 44) in die erste Position zurückbewegt wird, Das zweite elastische Vorspannmittel (52) bewegt das Shuttle (34), so dass das erste Oberflächenprofil (a-b) mit den Verriegelungselementen (36) interagiert.

8. Kupplungsmechanismus (10) nach einem der Ansprüche 5 bis 7, bei dem das erste elastische Vorspannmittel (48) zwischen dem Shuttle (34) und einem Stößel (46) wirkt, der sich von der Lasche (22) nach außen in Richtung die Einsteckachse (A-A) erstreckt.

9. Kupplungsmechanismus (10) nach der Definition eines der vorhergehenden Ansprüche, bei dem der bewegliche Anschlag (30, 32, 42, 44) einen Mechanismus (30, 32, 42) umfasst, der ihn selektiv in einer seiner ersten und zweiten Stellungen stabil halten kann.

10. Kupplungsmechanismus (10) nach der Definition eines der vorhergehenden Ansprüche, bei dem der bewegliche Anschlag (30, 32, 42, 44) mit einer manuellen Betätigungseinrichtung und/oder einem angetriebenen Antrieb (80) verbunden ist.

11. Kupplungsmechanismus (10) nach Anspruch 10, bei dem der bewegliche Anschlag (30, 32, 42, 44) mit dem manuellen Betätigungsmittel und/oder dem angetriebenen Antrieb (80) durch ein kinematisches Gestänge (70a,b, 72a₁,a₂,b₁,b₂, 74, 76, 78, 82) verbunden ist.

12. Kupplungsmechanismus (10) nach Anspruch 11, umfassend mehrere Vertiefungen (14), Laschen (22), kinematische Verbindungen (70a,b, 72a₁,a₂,b₁,b₂, 74, 76, 78, 82) und bewegliche Anschläge (30, 32, 42, 44), bei denen die kinematischen Verbindungen (70a,b, 72a₁,a₂,b₁,b₂, 74, 76, 78, 82) gemeinsam mit dem manuellen Betätigungsmittel und/oder dem angetriebenen Antrieb (80) verbunden sind.

13. Kupplungsmechanismus (10) nach einem der vorhergehenden Ansprüche, bei dem das Shuttle (34) zwischen einer vollständig nach außen gerichteten Position entlang die Einsteckachse (A-A), einer Mittelposition entlang die Einsteckachse (A-A) und einer vollständig nach innen gerichteten Position entlang die Einsteckachse (A-A) übergehen kann.

14. Kupplungsmechanismus (10), wie in einem der vorhergehenden Ansprüche definiert, in Kombination mit mindestens einem der ersten und zweiten Gegenstände (16, 24), wobei dieser Gegenstand (16, 24) umfasst:
(a) ein Fahrzeug oder Fahrzeugteil
(b) eine Last
(c) eine Andockvorrichtung für das Fahrzeug,
(d) einen Container für Waren oder Fracht
(e) eine Maschinenplatte
(f) eine Werkzeugmaschine.

15. Kupplungsmechanismus (10) nach einem der Ansprüche 1 bis 13 in Kombination mit mindestens einem der ersten und zweiten Gegenstände (16, 24), wobei dieser Gegenstand (16, 24) ein Luftfahrzeug umfasst.

## Revendications

1. Mécanisme d'accouplement (10) pour fixer un premier objet (16) à un second objet (24), le mécanisme d'accouplement comprenant :
une patte (22) configurée pour être formée sur ou fixée au second objet (24), la patte (22) étant amovible le long d'un axe d'insertion (A-A) ;
une navette (34) mobile à l'intérieur de la patte (22) le long de l'axe d'insertion (A-A) ;
un premier moyen de polarisation élastique (48) agencé pour polariser la navette (34); une pluralité d'éléments de verrouillage (36) chacun mobile radialement dans la patte (22) par rapport à l'axe d'insertion (A-A), entre une position rétractée permettant l'insertion et le retrait libres de la patte (22), et une position étendue ;
chaque élément de verrouillage (36) étant à la fois mobile de la position rétractée et pouvant être maintenu en position déployée par un premier profil de surface (a-b) de la navette (34);
le mécanisme d'accouplement (10) comprenant en outre une butée mobile (30, 32, 42, 44) ayant:
une première position dans laquelle le mouvement polarisé de la navette (34) le long de l'axe d'insertion (A-A) est limité de sorte que les éléments de verrouillage (36) interagissent avec le premier profil de surface (a-b) de la navette (34), et
une seconde position dans laquelle le mouvement polarisé de la navette (34) le long de l'axe d'insertion (A-A) est prolongé de manière à faire interagir les éléments de verrouillage (36) avec un second profil de surface (b-c) de la navette (34) par lequel les éléments de verrouillage (36) se déplacent de leur position déployée à leur position rétractée, permettant ainsi la déconnexion des premier (16) et second (24) objets
le mécanisme d'accouplement comprenant en outre un puits (14) configuré pour être formé ou fixé au premier objet (16) ;
la patte (22) étant amovible et insérable dans le puits (14) le long de l'axe d'insertion (A-A) ; chaque élément de verrouillage (36) en position déployée faisant saillie dans un évidement (38) formé dans une paroi latérale du puits (14) de manière à verrouiller la cosse (22) dans le puits (14) ;
et
les éléments de verrouillage (36) en position rétractée permettant de retirer la patte (22) du puits (14);
**caractérisé en ce que** l'insertion de la patte (22) dans le puits (14) provoque le premier moyen de polarisation élastique (48) pour éloigner la navette (34) d'une base du puits (14).

2. Mécanisme d'accouplement (10) selon la revendication 1, dans lequel la butée mobile (30, 32, 42, 44) comprend un corps (44) coulissant à l'intérieur de la patte (22) entre la première et la deuxième position et qui peut être maintenu sélectivement à la première position et à la seconde position.

3. Mécanisme d'accouplement (10) selon la revendication 1 ou 2, dans lequel le premier profil de surface (a-b) de la navette (34) déplace les éléments de verrouillage (36) vers l'extérieur par rapport à l'axe d'insertion (A-A) et en contact avec la paroi latérale du puits (14), les éléments de verrouillage (36) déplaçant la navette (34) avec la patte (22) jusqu'à ce que les éléments de verrouillage (36) tirent au niveau de la partie encastrée (38) de la paroi latérale du puits (14),
après quoi ils sont poussés vers l'extérieur dans l'engagement de verrouillage de celui-ci par le premier profil de surface (a-b) et la navette (34) se déplace alors sous l'influence du premier moyen de polarisation élastique (48), de sorte que le premier profil de surface (a-b) peut maintenir les éléments de verrouillage (36) verrouillés dans la partie encastrée (38) de la paroi latérale du puits (14).

4. Mécanisme d'accouplement (10) tel que défini dans l'une quelconque des revendications précédentes, dans lequel le premier profil de surface (a-b) comprend une pente qui, avec le mécanisme d'accouplement (10) sous une force ou une charge de séparation et la butée mobile (30, 32, 42, 44) déplacée vers la deuxième position, permet à la navette (34) d'être déplacée par le premier moyen de polarisation élastique (48) de sorte que les éléments de verrouillage (36) interagissent avec le second profil de surface (b-c).

5. Mécanisme d'accouplement (10) tel que défini dans l'une quelconque des revendications précédentes, comprenant un second moyen de polarisation élastique (52) agencé pour écarter la navette (34) de la butée mobile (30, 32, 42, 44).

6. Mécanisme d'accouplement (10) selon la revendication 5, dans lequel, lorsque la butée mobile (30, 32, 42, 44) est déplacée vers la seconde position, le second moyen de polarisation élastique (52) permet à la butée mobile (30, 32, 42, 44) de s'éloigner de la navette (34).

7. Mécanisme d'accouplement (10) selon la revendication 6, dans lequel, lorsque les éléments de verrouillage (36) ont été libérés de l'intérieur du puits (14) par interaction avec le second profil de surface (b-c), la patte (22) s'est séparée du puits (14) et la butée mobile (30, 32, 42, 44) est ramenée à la première position, le second moyen de polarisation élastique (52) déplace la navette (34) de sorte que le premier profil de surface (a-b) interagisse avec les éléments de verrouillage (36).

8. Mécanisme d'accouplement (10) selon l'une quelconque des revendications 5 à 7, dans lequel les premiers moyens de polarisation élastique (48) agissent entre la navette (34) et un piston (46) s'étendant vers l'extérieur de la patte (22) dans la direction de l'axe d'insertion (A-A).

9. Mécanisme d'accouplement (10) tel que défini dans l'une quelconque des revendications précédentes, dans lequel la butée mobile (30, 32, 42, 44) comprend un mécanisme (30, 32, 42) capable de le maintenir de manière sélective de manière stable dans l'une ou l'autre de ses première et deuxième position.

10. Mécanisme d'accouplement (10) tel que défini dans l'une quelconque des revendications précédentes, dans lequel la butée mobile (30, 32, 42, 44) est reliée à des moyens d'actionnement manuel et/ou à un actionneur motorisé (80).

11. Mécanisme d'accouplement (10) selon la revendication 10, dans lequel la butée mobile (30, 32, 42, 44) est reliée aux moyens d'actionnement manuel et/ou à l'actionneur motorisé (80) par une liaison cinématique (70a,b, 72a₁, a₂,b₁,b₂, 74, 76, 78, 82).

12. Mécanisme d'accouplement (10) selon la revendication 11, comprenant une pluralité de puits (14), de pattes (22), de liaisons cinématiques (70a,b, 72a₁,a₂,b₁,b₂, 74, 76, 78, 82) et de butées mobiles (30, 32, 42, 44), dans lequel les liaisons cinématiques (70a,b, 72a₁,a₂,b₁,b₂, 74, 76, 78, 82) sont reliées en commun aux moyens d'actionnement manuel et/ou à l'actionneur motorisé (80).

13. Mécanisme d'accouplement (10) tel que défini dans l'une quelconque des revendications précédentes, dans lequel la navette (34) peut passer d'une position complètement vers l'extérieur le long de l'axe d'insertion (A-A), d'une position médiane le long de l'axe d'insertion (A-A) et d'une position entièrement vers l'intérieur le long de l'axe d'insertion (A-A).

14. Mécanisme d'accouplement (10) tel que défini dans l'une quelconque des revendications précédentes, en combinaison avec au moins un des premier et second objets (16, 24), dans lequel cet objet (16, 24) comprend:
a) un véhicule ou une pièce de véhicule
b) une charge
c) un dispositif d'amarrage pour véhicule
d) un conteneur pour marchandises ou cargaison
e) un plateau de machine
f) une machine-outil.

15. Mécanisme d'accouplement (10) selon l'une quelconque des revendications 1 à 13 en combinaison avec au moins un des premier et second objets (16, 24), dans lequel cet objet (16, 24) comprend un aéronef.
